# EUROPEAN PATENT APPLICATION

(11) **EP 4 328 011 A1**
(43) Date of publication of application: **28.02.2024**
(21) Application number: 22382797.3
(22) Date of filing: 24.08.2022
(51) Int. Cl.: B29C 65/34, B29C 65/48, B29C 65/50, F03D 1/06, B29L 31/08

(54) **WIND TURBINE BLADE, MOLD, MANUFACTURING ARRANGEMENT AND METHOD FOR MANUFACTURING A WIND TURBINE BLADE**

(71) Applicant: Siemens Gamesa Renewable Energy Innovation & Technology S.L., 31621 Sarriguren (Navarra) (ES)
(72) Inventor: March Nomen, Victor, 08194 Les Fonts (ES)
(74) Representative: SGRE-Association

(57) **Abstract**

A wind turbine blade (3), comprising:
a first and a second blade component (C1, C2) connected with each other in an overlap region (24) by thermal welding, the first blade component (C1) comprising a blade shell (10),
a resistive element (25) arranged between the first and second blade components (C1, C2) in the overlap region (24) as a remnant of the thermal welding, and
an electrically conductive element (27) extending through the blade shell (10) and being electrically connected to the resistive element (25) for supplying power (I) to the resistive element (25) during the thermal welding.

Thus, the first and second blade components can be joined by thermal welding. Further, the resistive element used as heating element for thermal welding can be heated by electrical current even when the resistive element is difficult to assess from the interior cavity of the blade.

## Description

The present invention relates to a wind turbine blade and to a mold, manufacturing arrangement and method for manufacturing a wind turbine blade.

Wind turbine blades are commonly made from fiber-reinforced resin. To facilitate manufacture, individual blade components are often pre-manufactured and the pre-manufactured components are connected with each other. For example, a pressure side and a suction side shell of a blade are manufactured separately and are then connected with each other at the leading and trailing edges. Further, for example, structural elements such as a shear web is manufactured separately and is then connected to a pressure side and a suction side shell of a blade. Known methods of connecting pre-manufactured blade components with each other include adhesive processes as well as infusion of a dry fiber lay-up in a connection region with resin. Further, US 2020/0171768 A1 discloses thermal welding for joining blade components.

It is one object of the present invention to provide an improved wind turbine blade and an improved method for manufacturing a wind turbine blade.

According to a first aspect, a wind turbine blade is provided. The wind turbine blade comprises:
a first and a second blade component connected with each other in an overlap region by thermal welding, the first blade component comprising a blade shell,
a resistive element arranged between the first and second blade components in the overlap region as a remnant of the thermal welding, and
an electrically conductive element extending through the blade shell and being electrically connected to the resistive element for supplying power to the resistive element during the thermal welding.

Connecting the first and second blade components by thermal welding provides a faster connection method compared to a laminate joint because curing of an epoxy resin is not required. Further, an advantage of thermal welding compared to a glue joint is that an adhesive which adds significant weight to the blade can be avoided.

Further, during manufacture of the blade, in particular during thermal welding for providing the joint between the first and second blade components, the resistive element arranged at an interior side of the blade shell can be heated by electrical current even when the resistive element is difficult to assess from the interior side. In particular, the resistive element arranged at the interior side of the blade shell can be supplied with power from a power source arranged outside (i.e. at an exterior side) of the blade shell. The power source can in particular, be arranged at an opposite side of the blade shell with respect to the resistive element.

For example, in the case of an overall blade shell being in a closed state (the overall blade shell including the blade shell of the first component), an inner cavity of the overall blade shell can be too small to be (easily) assessable for a worker. In particular, towards the tip region of the blade, the inner cavity is becoming increasingly smaller. Hence, it is difficult to electrically connect the resistive element arranged in the inner cavity with a power source from inside the cavity. By having the electrically conductive element extending through the blade shell of the first component, the electrical current can be guided from outside of the blade shell (e.g., from outside of a mold in which the blade shell is arranged) through the blade shell (e.g., through the mold and the blade shell) to the resistive element. In this manner, even a resistive element arranged in a location that is difficult to reach from inside the blade can be heated for thermal welding.

The wind turbine blade is part of a rotor of a wind turbine. The wind turbine is an apparatus to convert the wind's kinetic energy into electrical energy. The wind turbine comprises, for example, a rotor having one or more of the blades connected each to a hub, a nacelle including a generator, and a tower holding, at its top end, the nacelle. The tower of the wind turbine may be connected via a transition piece to a foundation of the wind turbine, such as a monopile in the seabed or a concrete foundation.

The wind turbine blade, e.g., its root section, is fixedly or rotatably connected to the hub. Apart from a (cylindrical) root section, the wind turbine blade is formed aerodynamically. The wind turbine blade comprises, for example, a pressure side (upwind side) and a suction side (downwind side). The pressure side and the suction side are connected with each other at a leading edge and a trailing edge. The pressure and suction sides and the leading and trailing edges define an airfoil of the wind turbine blade.

The wind turbine blade has a shell (overall shell) made, for example, from a fiber-reinforced resin. The blade shell is, for example, manufactured by arranging fiber lay-up in a mold, infusing the fiber lay-up with resin, and curing the resin. The overall blade shell surrounds, for example, an interior cavity of the blade. The blade shells for the pressure side and the suction side are, for example, manufactured separately (e.g., in separate upper and lower molds) and connected with each other by thermal welding. The wind turbine blade further comprises, for example, one or more shear webs connecting the blade shells of the pressure side and the suction side in the interior cavity of the blade. The shear web provides shear strength to the blade.

A pressure side shell, suction side shell, the one or more shear webs and/or other blade components may be pre-manufactured separately. Then, the pre-manufactured blade components (e.g., a first and a second blade component) may be joined with each other, for example, by thermal welding.

Thermal welding includes, for example, thermal resin welding of weldable resin such as thermoplastic resin or weldable thermoset resin. Thermal welding is, for example, thermoplastic welding.

The resistive element is, in particular, an electrically conductive element. The resistive element has, in particular, a first and a second terminal. The resistive element can produce heat by means of a current that is applied to the resistive element and that is flowing between the first and second terminals of the resistive element. The resistive element is, in particular, a heating element. The heat produced by the resistive element depends on the electrical resistance of the resistive element and the amount of current and/or voltage applied to the resistive element.

The resistive element can be made of a metal. For example, the resistive element is made of copper. Alternatively, the resistive element can be made of carbon fibers.

The resistive element is arranged between the blade components such that it is sandwiched between the blade components in the overlap region.

The overlap region is a region in which a portion of the first blade component overlaps with a portion of the second blade component. The overlap region is a joining region of the first and second blade components.

During manufacture, a thermoplastic resin or weldable thermoset resin may be placed between the first and second blade components in the overlap region, e.g., in contact with a surface of the first and/or second blade component and/or the resistive element. When the resistive element is heated up by applying an electrical current through the resistive element, the thermoplastic resin or weldable thermoset resin melts and/or softens and joins the blade components.

The electrically conductive element extending through the blade shell of the first blade component is - in addition to the resistive element - another remnant of the thermal welding.

The electrically conductive element is, in particular, extending through the blade shell from an interior surface of the blade shell to an exterior surface of the blade shell.

A body of the electrically conductive element is, for example, at least partially embedded in the blade shell of the first component. The electrically conductive element may also be, for example, completely embedded in the blade shell of the first component apart from electrical connections with the resistive element and the power source/further resistive element of the mold.

The electrically conductive element is, in particular, fixed in the blade shell of the first component.

The blade shell comprises, for example, a hole (e.g., through hole) in which the electrically conductive element is arranged. The electrically conductive element is, for example, casted in fiber-reinforced resin of the blade shell.

The electrically conductive element is, in particular, a connecting element for connecting to a matching connecting element (e.g., further electrically connecting element of a mold) arranged at the exterior surface of the blade shell.

The electrically conductive element is, for example a pin or plug.

The blade may comprise more than one electrically conductive elements each extending through the blade shell at different locations of the blade shell for supplying power to one or more resistive elements. The blade may, for example, comprise a first electrically conductive element extending through the blade shell for electrical connection with the first terminal of the resistive element and a second electrically conductive element extending through the blade shell for electrical connection with the second terminal of the resistive element.

Alternatively or in addition, the blade may comprise more than one resistive element electrically connected to each other in series at their respective first and/or second terminals. By using more than one resistive element, a joint between the first and second blade components over a large bonding line can be realized by thermal welding. Further, by using more than one resistive element, the voltage required for heating a respective one of resistive elements can be kept small (e.g., at or below 690 V and/or 220 V). In the case of more than one resistive element, the blade may comprise more than one electrically conductive element extending through the blade shell for supplying power to several or all of the resistive elements.

According to an embodiment of the first aspect, the electrically conductive element extending through the blade shell is arranged outside of the overlap region and/or the electrically conductive element is electrically connected to the resistive element by an electrical cable.

The electrical cable (electrical wire) is, for example, arranged at the inner surface of the blade shell.

According to a further embodiment of the first aspect, the electrically conductive element extending through the blade shell comprises a first end electrically connected to the resistive element and a second end for releasable electrical connection with a power source.

For example, the first end of the electrically conductive element is electrically connected to the resistive element by means of an electrical cable.

The second end of the electrically conductive element is, in particular, electrically connected with the power source for the welding process and is disconnected from the power source after the welding process is finished.

The first end of the electrically conductive element is, in particular, arranged at the interior surface of the blade shell and the second end is arranged at the exterior surface of the blade shell.

According to a further embodiment of the first aspect, the second end of the electrically conductive element of the blade shell is configured for releasable electric connection with a further electrically conductive element of a mold, the mold being configured for manufacturing the blade shell and the further electrically conductive element being configured for electrical connection with the power source.

This has the advantage that the electrical connection of the resistive element can be simplified by providing the electrical connection with the power source via a further electrically conductive element of a mold. In particular, the first component with the blade shell can be manufactured in a mold which can be also used for providing the electrical connection with the power source during thermal welding.

According to a further embodiment of the first aspect, the second end of the electrically conductive element of the blade shell is configured for electrical connection with the further electrically conductive element of the mold by means of:
a threaded connection,
mating surfaces of the electrically conductive element and the further electrically conductive element,
applying pressure for pressing the electrically conductive element and the further electrically conductive element to each other, and/or
a plug-in connection.

Thus, a releasable electrical connection of the electrically conductive element of the blade shell and the further electrically conductive element of the mold can be realized in a simple manner.

According to a further embodiment of the first aspect,
the blade comprises the electrically conductive element in an outboard portion of the blade shell, and/or
the blade comprises the electrically conductive element only in an outboard portion of the blade shell, and
the outboard portion of the blade shell extends from a tip of the blade in the direction of a root of the blade by a length of 80% or smaller, 70% or smaller, 60% or smaller, 50% or smaller and/or 40% or smaller of a total blade length.

Thus, the blade allows a power supply of the resistive element from outside of the blade in a part of the blade in which the interior cavity of the blade is relatively small and difficult to assess.

According to a further embodiment of the first aspect,
the second blade component comprises a further blade shell or a structural element, a reinforcement beam, a web and/or a shear web, and/or
the blade shell and/or the further blade shell comprises a blade half shell, a lower blade shell, an upper blade shell, a pressure side shell and/or a suction side shell.

According to a second aspect, a mold for manufacturing the above-described wind turbine blade is provided. The mold comprises:
a molding surface for molding the first blade component, the first blade component comprising the blade shell and the electrically conductive element extending through the blade shell and being connected to the resistive element of the blade, and
a further electrically conductive element exposed at the molding surface for electrical connection with the electrically conductive element of the blade shell for supplying power to the resistive element for thermal welding.

The mold is, for example, a mold for manufacturing a blade half shell.

The further electrically conductive element is, for example, extending through a body of the mold from the molding surface to another surface of the mold body arranged opposite the molding surface.

The further electrically conductive element is, for example, removable from the mold body or is permanently fixed to the mold body.

According to a third aspect, a manufacturing arrangement for manufacturing a wind turbine blade is provided. The manufacturing arrangement comprises the above-described blade and the above-described mold. Further, the electrically conductive element of the blade shell is electrically connected to the further electrically conductive element of the mold for supplying power to the resistive element of the blade for thermal welding.

The manufacturing arrangement comprises, for example, a power source electrically connected to the further electrically conductive element of the mold. In the case of more than one resistive element, the manufacturing arrangement may comprise more than one power source electrically connected to the more than one resistive element, respectively.

According to a fourth aspect, a method for manufacturing a wind turbine blade is provided. The method comprises the steps of:
a) arranging a first and a second blade component such that they overlap with each other in an overlap region, wherein the first blade component comprises a blade shell and an electrically conductive element extending through the blade shell, a resistive element is arranged between the first and second blade components in the overlap region, and the resistive element is connected to the electrically conductive element, and
b) connecting the first and second blade components to each other by thermal welding including supplying power through the electrically conductive element of the blade shell to the resistive element for heating the resistive element.

According to an embodiment of the fourth aspect,
step a) includes closing an overall shell of the blade by arranging the first blade component on the second blade component or by arranging the first blade component on a further blade component, and
step b) is carried out in the closed state of the overall blade shell.

The closed state of the overall blade shell is, in particular, a state in which the overall blade shell is closed with respect to a cross-section of the overall blade shell. The closed state of the overall blade shell is, in particular, a state in which the interior cavity surrounded by the overall blade shell is only accessible from an opening in the longitudinal direction of the blade such as an opening at the root portion of the blade. The closed state of the overall blade shell is, in particular, a state in which the overall blade shell is closed by arranging blade components - such as two half shells - on each other but the blade components need not to be bonded to each other yet.

According to a further embodiment of the fourth aspect, the method comprises the steps of:
providing a mold with a molding surface and a further electrically conductive element exposed at the molding surface, and
providing the first blade component with the electrically conductive element extending through its blade shell,
wherein in step b), power is supplied through the further electrically conductive element of the mold and the electrically conductive element of the blade shell to the resistive element.

According to a further embodiment of the fourth aspect, the method comprises the step of manufacturing the first blade component by infusing a fiber lay-up arranged in a mold and the electrically conductive element embedded at least partially in the fiber lay-up with resin and curing the resin.

According to a further embodiment of the fourth aspect, the method comprises, before step a), the steps of:
arranging the resistive element at the first blade component having the blade shell, and
electrically connecting the electrically conductive element of the blade shell to the resistive element.

The electrically conductive element of the blade shell is, for example, electrically connected to the resistive element by an electrical cable.

The electrically conductive element of the blade shell is, in particular, electrically connected to the resistive element before closing the overall blade shell.

According to a further embodiment of the fourth aspect, the method comprises, before step a), the step of electrically connecting the electrically conductive element of the blade shell to a power source and/or electrically connecting the further electrically conductive element of the mold to the power source.

The embodiments and features described with reference to the wind turbine blade of the present invention apply mutatis mutandis to the mold, the manufacturing arrangement and the method of the present invention and vice versa.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a wind turbine according to an embodiment;
Fig. 2 shows a cross-section view of a wind turbine blade of the wind turbine of Fig. 1 according to an embodiment;
Fig. 3 shows a detail view of portion III of Fig. 2;
Fig. 4 illustrates an arrangement of resistive elements used as heating elements for joining blade components of the blade of Fig. 2 by thermal welding;
Fig. 5 shows a lower mold and a lower blade shell of the blade of Fig. 2 during a manufacturing step;
Fig. 6 shows an upper mold and an upper blade shell of the blade of Fig. 2 during a manufacturing step;
Fig. 7 shows a further embodiment of an upper mold and an upper blade shell of the blade of Fig. 2;
Fig. 8 shows a further embodiment of an upper mold and an upper blade shell of the blade of Fig. 2;
Fig. 9 shows a further embodiment of an upper mold and an upper blade shell of the blade of Fig. 2;
Fig. 10 shows a view similar as Fig. 6 with a resistive element used as heating element for thermal welding arranged in the upper blade shell;
Fig. 11 shows a view similar as Fig. 10 with a power source electrically connected to the resistive element;
Fig. 12 shows a view similar as Fig. 11 with an established joint between the upper blade shell and a shear web; and
Fig. 13 shows a flowchart illustrating a method for manufacturing a wind turbine blade of the wind turbine of Fig. 1 according to an embodiment.

In the Figures, like reference numerals designate like or functionally equivalent elements, unless otherwise indicated.

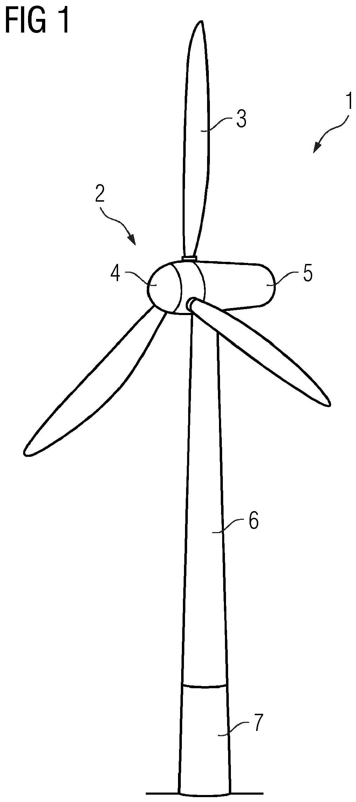

Fig. 1 shows a wind turbine 1 according to an embodiment. The wind turbine 1 comprises a rotor 2 having one or more blades 3 connected to a hub 4. The hub 4 is connected to a generator (not shown) arranged inside a nacelle 5. During operation of the wind turbine 1, the blades 3 are driven by wind to rotate and the wind's kinetic energy is converted into electrical energy by the generator in the nacelle 5. The nacelle 5 is arranged at the upper end of a tower 6 of the wind turbine 1. The tower 6 is erected on a foundation 7 such as a monopile or concrete foundation. The foundation 7 is connected to and/or driven into the ground or seabed.

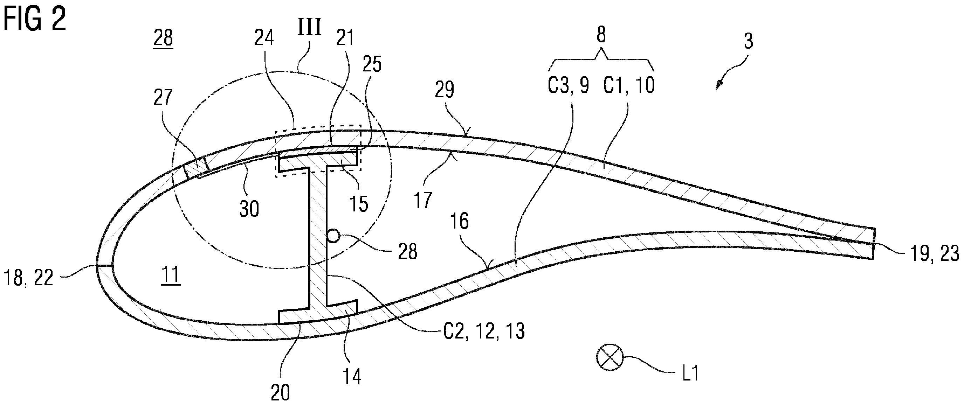

Fig. 2 shows a cross-section view of a wind turbine blade 3 of the wind turbine 1 of Fig. 1.

The blade 3 comprises an overall blade shell 8 including a lower blade shell 9 and an upper blade shell 10. The lower and upper blade shells 9, 10 are lower and upper blade shells with respect to a manufacturing position. The lower blade shell 9 is, for example, a pressure side shell and the upper blade shell 10 is, for example, a suction side shell or vice versa. The overall blade shell 8 surrounds an interior cavity 11 of the blade 3.

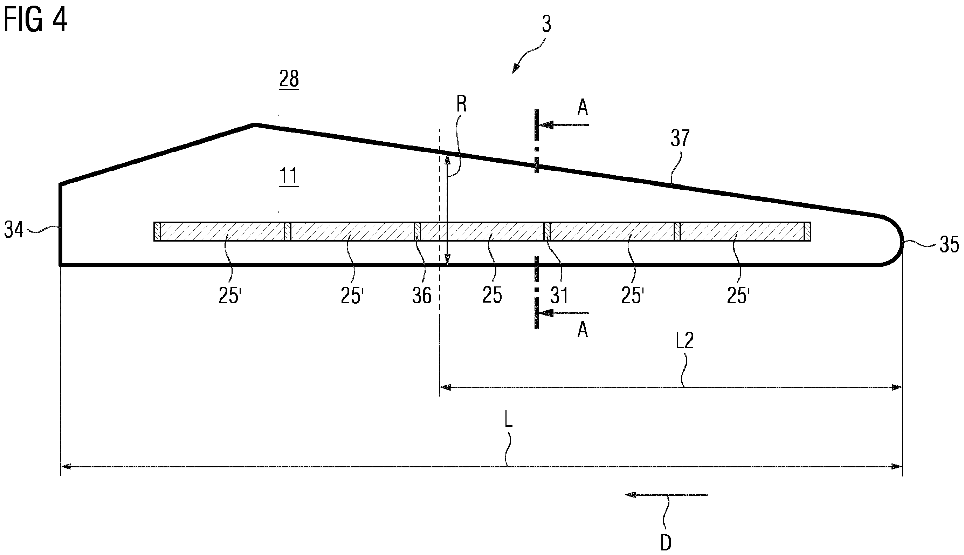

The blade 3 further comprises one or more structural elements 12 running in a longitudinal direction L1 of the blade 3. The longitudinal direction L1 of the blade 3 is, for example, pointing from a root 34 (Fig. 4) of the blade 3 to a tip 35 (Fig. 4) of the blade 3. The structural element 12 preferably comprises fiber composite material, in particular glass fiber mats. The structural element 12 can be a shear web, a spar cap or the like. In Fig. 2, a shear web 13 is shown as an example for a structural element 12. Although not shown in the figures, the blade 3 can also comprise more than one shear web 13. The shear web 13 is connecting the blade shells 9, 10 of the pressure side and the suction side in the interior cavity 11 of the blade 3 and is providing shear strength to the blade 3. The shear web 13 comprises two flanges 14, 15 that are attached to inner surfaces 16, 17 of the shells 9, 10, respectively.

The blade 3 is, for example, assembled from several pre-manufactured blade components C1, C2, C3 such as the lower blade shell 9, the upper blade shell 10, the structural element 12 and/or the shear web 13. Such pre-manufactured blade components C1-C3 may, for example, be connected to each other at joints 18, 19, 20, 21 by thermal welding. For example, the lower blade shell 9 is connected to the upper blade shell 10 in a first and a second joint 18, 19 by thermal welding. The first and second connection regions 18, 19 are, in particular, arranged at a leading edge 22 and a trailing edge 23 of the blade 3. Although not shown in Fig. 2, the lower and upper blade shells 9, 10 may overlap each other at the joints 18, 19. Furthermore, the structural element 12 such as the shear web 13 is connected to the lower blade shell 9 in a third joint 20 by thermal welding and/or is connected to the upper blade shell 10 in a fourth joint 21 by thermal welding.

In the following, exemplarily, the fourth joint 21 between the shear web 13 and the upper blade shell 10 by thermal welding is described. However, the following description may also be applied to one, more or all of the other joints 18, 19, 20.

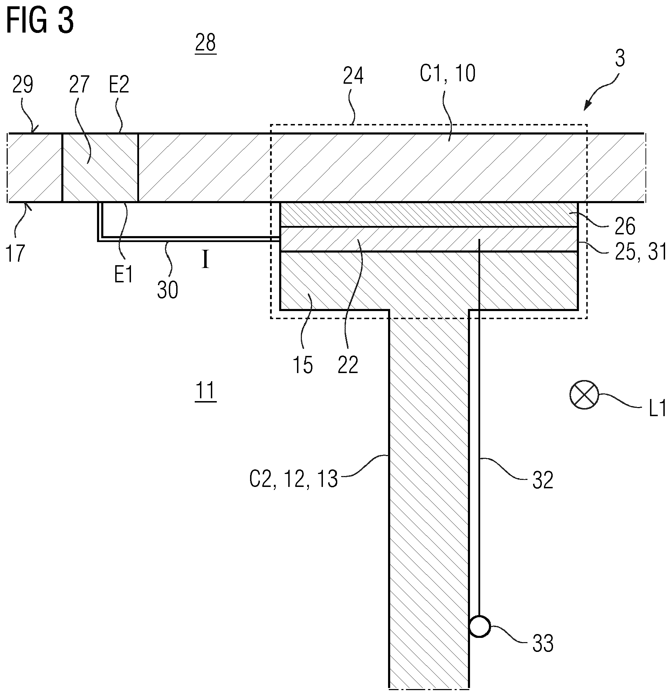

Fig. 3 shows a detail view of portion III of Fig. 2. Visible in Fig. 3 is a portion of the shear web 13 including its upper flange 15 and a portion of the upper blade shell 10. The upper blade shell 10 is an example of a first blade component C1. Further, the shear web 13 is an example of a second blade component C2. The shear web 13 and the upper blade shell 10 are connected with each other in an overlap region 24 by thermal welding. For providing the necessary heat for thermal welding, the blade 3 comprises a resistive element 25. The resistive element 25 is arranged between the shear web 13 (in particular the upper flange 15 of the shear web 13) and the upper blade shell 10 in the overlap region 24 during manufacture. Further, as can be seen in Fig. 3, the resistive element 25 remains after the manufacturing process in the blade 3. Also shown in Fig. 3 is that during the manufacturing process a weldable resin 26 is arranged between the shear web 13 (in particular the upper flange 15 of the shear web 13) and the upper blade shell 10 in the overlap region 24.

For joining of the two blade components C1, C2, the resistive element 25 is heated by supplying power I (electrical current I) to the resistive element 25. Since the resistive element 25 may be difficult to assess from the inner cavity 11 of the blade 3 (in particular when the cavity 11 is narrow as for the tip region of the blade 3), the blade 3 comprises an electrically conductive element 27 extending through the blade shell 10 for providing power I from outside 28 of the blade shell 10 (i.e. from outside 28 of the overall blade shell 8, Fig. 2).

The electrically conductive element 27 is at least partially embedded in the blade shell 10. The blade shell 10 with the electrically conductive element 27 is, for example, manufactured by infusing a fiber lay-up together with the electrically conductive element 27 embedded at least partially in the fiber lay-up with resin and curing the resin. The electrically conductive element 27 extends, for example, from the inner surface 17 of the blade shell 10 to an outer surface 29 of the blade shell 10.

The electrically conductive element 27 is electrically connected, for example by means of an electric cable 30, to the resistive element 25 (i.e. to a terminal 31 of the resistive element 25).

The resistive element 25 which is used as a heating element for the welding process during manufacture is left in the blade 3 as a remnant of the welding process. Further, also the electrically conductive element 27 and the electric connection 30 (cable 30) are left in the blade 3 as remnants of the welding process.

To avoid flashovers during lightning conditions, the resistive element 25 - and, thus, also the electrically conductive element 27 and the electric connection 30 - is electrically connected (reference sign 32) to a lightning conductor 33. Hence, the electrically conductive remnants 25, 27, 30 of the welding process can be integrated into a lightning protection system (not shown) of the blade 3.

In Fig. 3, reference sign E1 denotes a first end of the electrically conductive element 27 and E2 denotes a second end of the electrically conductive element 27.

As shown in Fig. 4, the blade 3 may comprise two or more of the resistive elements 25, 25' electrically connected to each other in series. Using more than one resistive element 25, 25' allows an easier heating of the resistive element 25, 25' even when the thermal welding process is carried out for a long bondline. Specially, since a length L of the blade 3 can be as large as 100 meter and more, using several resistive elements 25, 25' is advantageous.

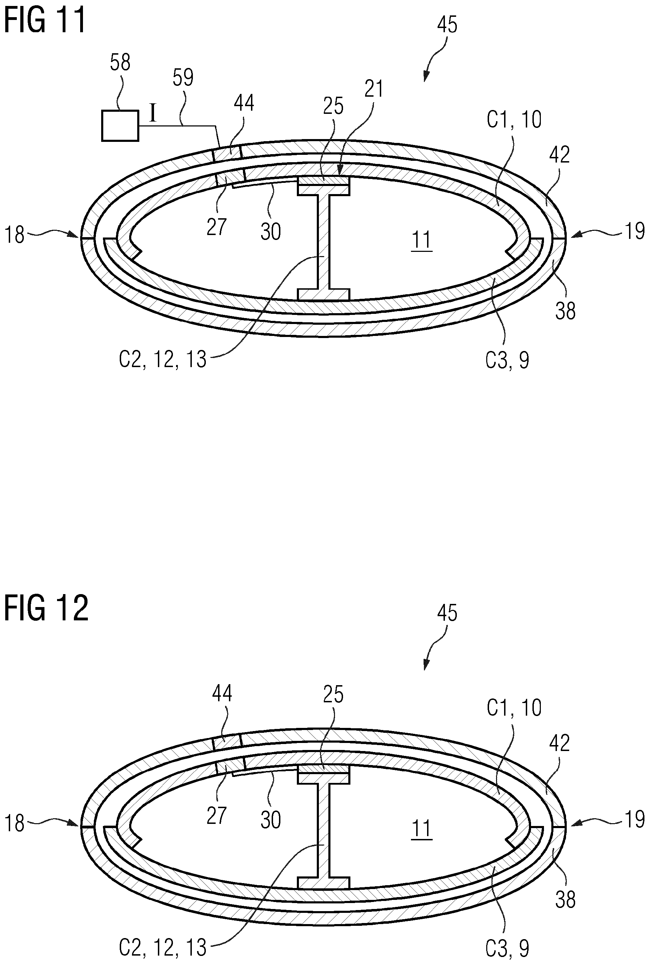

In Fig. 4, a root 34 and a tip 35 of the blade 3 are illustrated. Further, as an example five resistive elements 25, 25' electrically connected to each other in series are shown. Each resistive element 25, 25' has first and second terminals 31, 36 for electrical connection with a neighboring resistive element 25, 25' and a power source 58 (Fig. 11). In Fig. 4, only the first and second terminals 31, 36 of the resistive element 25 are denoted with a reference sign.

As the inner cavity 11 of the blade 3 is increasingly difficult to assess when approaching the tip 35 of the blade 3, the blade 3 may comprise the means (i. e. the electrically conductive element 27 and the electric connection 30, Fig. 3) for supplying power I to the resistive element 25 from the outside 28 of the blade 3 in particular and/or only in the outboard portion 37 of the blade 3. The outboard portion 37 of the blade 3 may extend from the blade tip 35 in the direction D of the root 34 of the blade 3 by a length L2 of 80% or smaller, 70% or smaller, 60% or smaller, 50% or smaller and/or 40% or smaller of a total blade length L. The reference sign R denotes a maximum radius (or maximum height) of the inner cavity 11 which is regarded as assessable from inside the blade 3.

It is noted that Fig. 2 can be seen as a cross-section view along line A-A in Fig. 4.

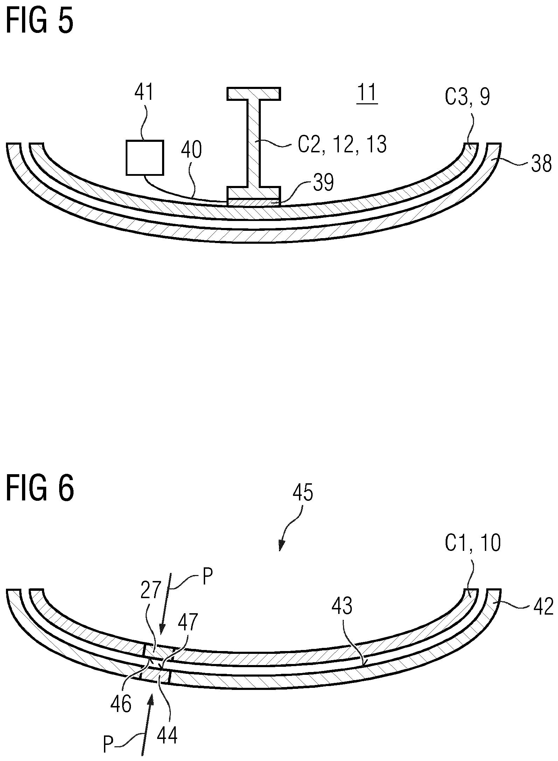

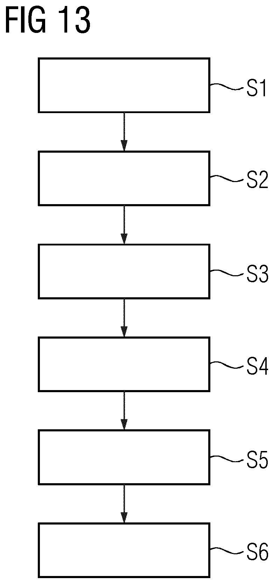

In the following, a method for manufacturing the blade 3, in particular for joining the blade components C1-C3 (Fig. 2) is described with respect to Figs. 5 to 13.

In the following, exemplarily, the fourth joint 21 (Fig. 2) between the shear web 13 and the upper blade shell 10 by thermal welding is described. However, the method described in the following may also be applied to one, more or all of the other joints 18, 19, 20 (Fig. 2).

In a first step S1 of the method, a lower mold 38 is provided for manufacturing the lower half shell 9, as shown in Fig. 5. In particular, a fiber lay-up is arranged in the lower mold 38 and infused with resin to pre-manufacture the lower half shell 9.

In a second step S2 of the method, the pre-manufactured lower shell 9 is joined with a pre-manufactured shear web 12, 13 by thermal welding, as shown in Fig. 5. In particular, a resistive element 39, a weldable resin (not shown in Fig. 5) and the shear web 13 are arranged on the lower shell 9. The resistive element 39 is electrically connected, for example by a cable 40, to a power source 41. It is noted that in Fig. 5 only one of two electrical connections between the power source 41 and the resistive element 39 are visible. Power is supplied to the resistive element 39 which is heated and, thus, melts or softens the weldable resin to provide a joint between the lower shell 9 and the shear web 13.

In this manufacturing state, there is only the lower shell 9 present but not yet the upper shell 10. Hence, the electrical connection of the power source 41 with the resistive element 39 can be easily performed from within the shell 9. Thus, no electrically conductive element extending through the blade shell 9 - such as the element 27 extending through the shell 10 in Fig. 2 - is necessary. In embodiments, however, such an electrically conductive element extending through the blade shell 9 may also be used for joining the lower shell 9 and the web 13.

In a third step S3 of the method, the upper shell 10 is pre-manufactured, as shown in Fig. 6. In particular, an upper mold 42 is provided and a fiber lay-up together with an electrically conductive element 27 is arranged on a molding surface 43 of the upper mold 42 and infused with resin to pre-manufacture the upper half shell 10 having the electrically conductive element 27 extending through the shell 10.

The upper mold 42 comprises a further electrically conductive element 44 exposed at the molding surface 43 for electrical connection with the electrically conductive element 27 of the blade shell 10. Having the electrical contact provided by the electrically conductive element 27 of the shell 10 and the further electrically conductive element 44 of the mold 42, power I from a power source 58 (Fig. 11) can be guided such that it crosses the mold 42 and the shell 10 and is supplied to the resistive element 25 for thermal welding.

The blade shell 10 with the electrically conductive element and the mold 42 with the further electrically conductive element 44 form a manufacturing arrangement 45 for manufacturing the wind turbine blade 3.

In Fig. 6, a first embodiment of the electrically conductive element 27 and the further electrically conductive element 44 are shown. The electrical contact between the elements 27, 44 may be provided by applying pressure P such that the elements 27, 44 are pressed against each other at mating surfaces 46 and 47 of the elements 27 and 44, respectively.

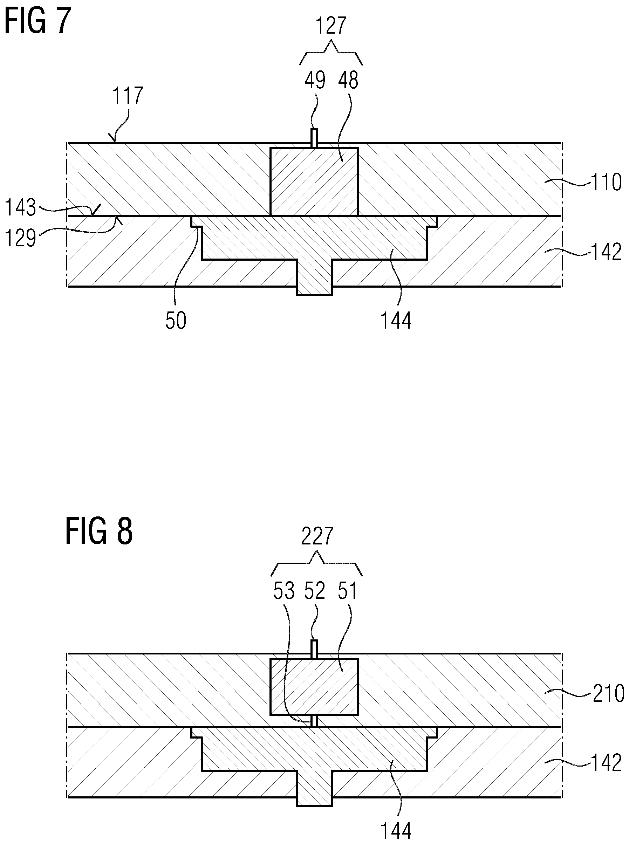

Fig. 7 to 9 show further embodiments of the electrically conductive element 27 and the further electrically conductive element 44.

In a second embodiment of the electrically conductive element 127 of the shell 110 (Fig. 7), a body 48 of the electrically conductive element 127 is casted in the shell 110 such that it is exposed at the outer surface 129 of the shell 110 (such as the outer surface 29 of the shell 10 in Fig. 2) for electrical contact with the further electrically conductive element 144. Further, the body 48 of the electrically conductive element 127 is casted in the shell 110 such that it is embedded at the inner surface 117 of the shell 110. The electrically conductive element 127 further comprises an electrical connection 49 for connection with the resistive element 25. The electrical connection 49 is, for example, provided by drilling a hole in the shell 110 and inserting an electric cable or an electrically conductive pin or the like.

The further electrically conductive element 144 of the mold 142 of the second embodiment comprises a different geometrical shape with respect to the further electrically conductive element 44 of the mold 42 of the first embodiment (Fig. 6). The further electrically conductive element 144 of the mold 142 comprises a stepped profile 50 towards the molding surface 143. Having the stepped profile 50 improves a vacuum condition during vacuum-induced resin infusion for casting the blade shell 110.

In a third embodiment of the electrically conductive element 227 of the shell 210 (Fig. 8), a body 51 of the electrically conductive element 227 is casted in the shell 210 such that it is completely embedded in the shell 210. The electrically conductive element 227 further comprises electrical connections 52, 53 for connection with the resistive element 25 and the power source 58, respectively.

The further electrically conductive element 144 of the mold 142 of the third embodiment is the same as for the second embodiment (Fig. 7).

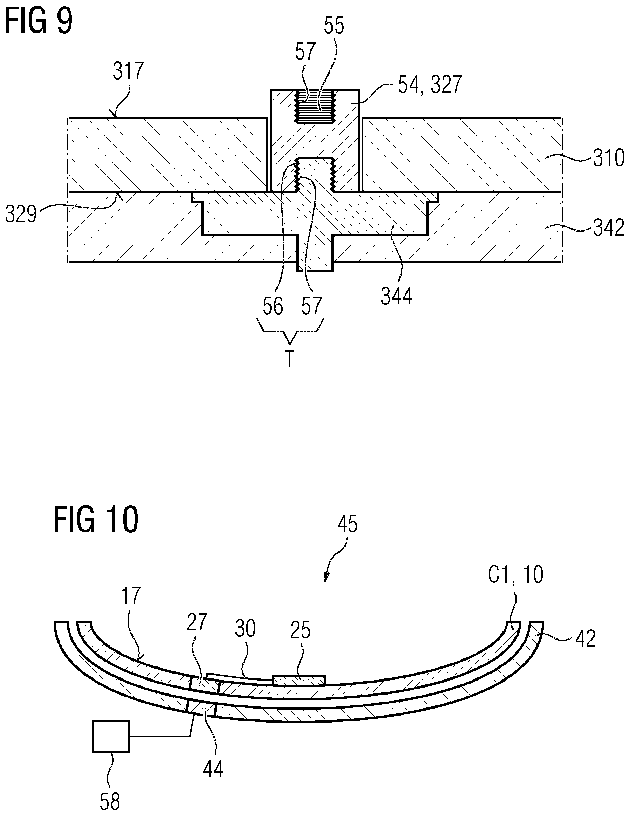

In a fourth embodiment of the electrically conductive element 327 of the shell 310 (Fig. 9), a body 54 of the electrically conductive element 327 is casted in the shell 310 such that it is exposed at the outer surface 329 of the shell 310 (such as the outer surface 29 of the shell 10 in Fig. 2) for electrical contact with the further electrically conductive element 344. Further, the body 54 of the electrically conductive element 327 is casted in the shell 310 such that it is also exposed at the inner surface 317 of the shell 310 for electrical contact with the resistive element 25. In Fig. 9, the body 54 of the electrically conductive element 327 is shown to protrude from the inner surface 317 of the shell 310. However, in other examples, the body 54 of the electrically conductive element 327 may also be flush with the inner surface 317.

The electrically conductive element 327, in particular the body 54 of the electrically conductive element 327, comprises two holes 55, 56 with threads 57. In Fig. 9, only the threads 57 in the hole 55 have been denoted with a reference sign for illustration purposes. The threaded hole 55 is configured for electrical connection with the resistive element 25 (e.g., via the electric cable 30, Fig. 3). The further threaded hole 56 is configured for electrical connection with the power source 58 via the further electrically conductive element 344. In particular, the further electrically conductive element 344 according to the fourth embodiment comprises a threaded portion 57 with outer threads for engaging the threaded hole 56 of the electrically conductive element 327 (threaded connection T).

It is noted that the features described with respect to any of the first to fourth embodiment of the electrically conductive elements 27, 127, 227, 327 and the further electrically conductive elements 44, 144, 344 can be applied to any other of the first to fourth embodiment as suitable. For example, elements 27, 127, 227 may also comprises one or more threaded holes similar as element 327 for electrical (and mechanical) connections.

In a fourth step S4 of the method, the resistive element 25 is provided and the electrical connections of the resistive element 25 are established, as shown in Fig. 10. In particular, the electrically conductive element 27 of the shell 10 and the further electrically conductive element 44 of the mold 42 are electrically connected with each other. Depending on the embodiment of the electrically conductive elements 27, 44 (see Figs. 6 to 9), this electrical connection is established by applying pressure P (e.g., Fig. 6) or by a threaded connection (e.g., Fig. 9) or by other means.

Further, in step S4, the resistive element 25 (and the weldable resin, not shown) is arranged on the upper shell 10 (Fig. 10). Then, the resistive element 25 is electrically connected with the electrically conductive element 27, for example by means of an electric cable 30. The electric cable 30 is, for example, arranged (e.g., laid) on the inner surface 17 of the upper shell 10 and fixed there.

Furthermore, a power source 58 is provided and electrically connected with the further electrically conductive element 44 of the mold 42.

In a fifth step S5 of the method, the upper shell 10 in the upper mold 42 is turned upside down and arranged on the lower shell 9 and the web 13 in the lower mold 38, as shown in Fig. 11. Hence, the overall blade shell 8 (Fig. 2) is closed.

In other embodiments, it is also possible to keep the upper shell 10 in its position and turn the lower shell 9 and the web 13 upside down and arrange them on the upper shell 10.

In a sixth step S6 of the method, the upper shell 10 and the web 13 are mechanically connected with each other by thermal welding. In particular, an electrical current I is supplied from the power source 58 and flows through an electrical cable 59, the further electrically conductive element 44 of the mold, the electrically conductive element 27 of the shell 10, the electrical cable 30 to the resistive element 25 for heating the resistive element 25. In this manner, the mechanical joint 21 between the upper shell 10 and the web 13 is established.

Further, also the joints 18 and 19 between the upper shell 10 and the lower shell 9 can be established in a similar manner as the joint 21.

In a seventh step S7 of the method, the power source 58 and the electrical connection 59 from the power source 58 to the further electrically conductive elements 44 of the upper mold 42 are removed.

Although the present invention has been described in accordance with preferred embodiments, it is obvious for the person skilled in the art that modifications are possible in all embodiments.

## Claims

1. A wind turbine blade (3), comprising:
a first and a second blade component (C1, C2) connected with each other in an overlap region (24) by thermal welding, the first blade component (C1) comprising a blade shell (10),
a resistive element (25) arranged between the first and second blade components (C1, C2) in the overlap region (24) as a remnant of the thermal welding, and
an electrically conductive element (27) extending through the blade shell (10) and being electrically connected to the resistive element (25) for supplying power (I) to the resistive element (25) during the thermal welding.

2. The wind turbine blade (3) according to claim 1, wherein the electrically conductive element (27) extending through the blade shell (10) is arranged outside of the overlap region (24) and/or the electrically conductive element (27) is electrically connected to the resistive element (25) by an electrical cable (30).

3. The wind turbine blade (3) according to claim 1 or 2, wherein the electrically conductive element (27) extending through the blade shell (10) comprises a first end (E1) electrically connected to the resistive element (25) and a second end (E2) for releasable electrical connection with a power source (58).

4. The wind turbine blade (3) according to claim 3, wherein the second end (E2) of the electrically conductive element (27) of the blade shell (10) is configured for a releasable electric connection with a further electrically conductive element (44) of a mold (42), the mold (42) being configured for manufacturing the blade shell (10), and the further electrically conductive element (44) being configured for electrical connection with the power source (58).

5. The wind turbine blade (3) according to claim 4, wherein the second end (E2) of the electrically conductive element (27) of the blade shell (10) is configured for electrical connection with the further electrically conductive element (44) of the mold (42) by means of:
a threaded connection (T),
mating surfaces (46, 47) of the electrically conductive element (27) and the further electrically conductive element (44),
applying pressure (P) for pressing the electrically conductive element (27) and the further electrically conductive element (44) to each other, and/or
a plug-in connection.

6. The wind turbine blade (3) according to one of claims 1 - 5, wherein
the blade comprises the electrically conductive element (27) in an outboard portion (37) of the blade shell (10), and/or
the blade comprises the electrically conductive element (27) only in an outboard portion (37) of the blade shell (10), and
the outboard portion (37) of the blade shell (10) extends from a tip (35) of the blade in a direction (D) of a root (34) of the blade by a length (L2) of 80% or smaller, 70% or smaller, 60% or smaller, 50% or smaller and/or 40% or smaller of a total blade length (L).

7. The wind turbine blade (3) according to one of claims 1 - 6, wherein
the second blade component (C2, C3) comprises a further blade shell (9) or a structural element (12), a reinforcement beam, a web (13) and/or a shear web (13), and/or
the blade shell (10) and/or the further blade shell (9) comprises a blade half shell (9, 10), a lower blade shell (9), an upper blade shell (10), a pressure side shell and/or a suction side shell.

8. A mold (42) for manufacturing a wind turbine blade (3) according to one of claims 1 - 7, comprising:
a molding surface (43) for molding the first blade component (C1), the first blade component (C1) comprising the blade shell (10) and the electrically conductive element (27) extending through the blade shell (10) and being connected to the resistive element (25) of the blade (3), and
a further electrically conductive element (44) exposed at the molding surface (43) for electrical connection with the electrically conductive element (27) of the blade shell (10) for supplying power (I) to the resistive element (25) for thermal welding.

9. A manufacturing arrangement (45) for manufacturing a wind turbine blade (3), comprising a blade (3) according to one of claims 1 - 7 and a mold (42) according to claim 8, wherein the electrically conductive element (27) of the blade shell (10) is electrically connected to the further electrically conductive element (44) of the mold (42) for supplying power (I) to the resistive element (25) of the blade (3) for thermal welding.

10. A method for manufacturing a wind turbine blade (3), comprising the steps of:
a) arranging (S5) a first and a second blade component (C1, C2) such that they overlap with each other in an overlap region (24), wherein the first blade component (C1) comprises a blade shell (10) and an electrically conductive element (27) extending through the blade shell (10), wherein a resistive element (25) is arranged between the first and second blade components (C1, C2) in the overlap region (24), and the resistive element (25) is electrically connected to the electrically conductive element (27), and
b) connecting (S6) the first and second blade components (C1, C2) to each other by thermal welding including supplying power (I) through the electrically conductive element (27) of the blade shell (10) to the resistive element (25) for heating the resistive element (25).

11. The method according to claim 10, wherein
step a) includes closing an overall shell (8) of the blade (3) by arranging the first blade component (C1) on the second blade component (C3) or by arranging the first blade component (C1) on a further blade component (C3), and
step b) is carried out in the closed state of the overall blade shell (8).

12. The method according to claim 10 or 11, comprising the steps of:
providing (S3) a mold (42) with a molding surface (43) and a further electrically conductive element (44) exposed at the molding surface (43), and
providing (S3) the first blade component (C1) with the electrically conductive element (27) extending through its blade shell (10),
wherein in step b), power (I) is supplied through the further electrically conductive element (44) of the mold (42) and the electrically conductive element (27) of the blade shell (10) to the resistive element (25).

13. The method according to one of claims 10 - 12, comprising the step of manufacturing the first blade component (C1) by infusing a fiber lay-up arranged in a mold (42) and the electrically conductive element (27) embedded at least partially in the fiber lay-up with resin and curing the resin.

14. The method according to one of claims 10 - 13, comprising, before step a), the steps of:
arranging (S4) the resistive element (25) at the first blade component (C1) having the blade shell (10), and
electrically connecting (S4) the electrically conductive element (27) of the blade shell (10) to the resistive element (25) .

15. The method according to one of claims 10 - 14, comprising, before step a), the step of electrically connecting (S4) the electrically conductive element (27) of the blade shell (10) to a power source (58) and/or electrically connecting (S4) the further electrically conductive element (44) of the mold (42) to the power source (58).
